# EUROPÄISCHE PATENTSCHRIFT

(11) **EP 3 510 901 B1**
(45) Veröffentlichungstag und Bekanntmachung des Hinweises auf die Patenterteilung: **05.05.2021**
(21) Anmeldenummer: 19160420.6
(22) Anmeldetag: 23.10.2017
(51) Int. Cl.: A47J 31/38

(54) **ESPRESSO- UND KAFFEEMASCHINE**
ESPRESSO AND COFFEE MACHINE
MACHINE À CAFÉ ET À EXPRESSO

(30) Priorität: 09.01.2017 EP 17150701
(43) Veröffentlichungstag der Anmeldung: 17.07.2019
(62) Teilanmeldung aus: 17197739.0
(73) Patentinhaber: CUP&CINO Kaffeesystem-Vertrieb GmbH & Co. KG, 33161 Hövelhof (DE)
(72) Erfinder: Epping, Frank Josef Paul, 33161 Hövelhof (DE)
(74) Vertreter: BOVARD AG

(56) Entgegenhaltungen:
- WO-A1-2005/079641
- FR-A- 1 187 907
- GB-A- 2 482 890
- GB-A- 2 488 327
- KR-U- 20100 010 456
- US-A- 4 421 014

## Beschreibung

### Technisches Gebiet der Erfindung

Die vorliegende Erfindung betrifft eine Espresso- und Kaffeemaschine und ein Verfahren zum Betreiben einer solchen Espresso- und Kaffeemaschine.

### Stand der Technik

In dem Bereich der Espresso- und Kaffeemaschinen gibt es diverse unterschiedliche Systeme, welche im Wesentlichen unterteilt sind in die Gruppe der sogenannten "Halbautomaten" oder auch als "Siebträgermaschinen" bezeichnet und die Gruppe der "Vollautomaten".

Bei den "Halbautomaten" mit einem abnehmbaren Siebträger werden Kaffeebohnen in einer Mühle zu Kaffeepulver vermahlen, welche von der eigentlichen Kaffeemaschine räumlich getrennt ist. Ist die gewünschte Menge an Kaffeepulver in einen Siebträger bzw. einem Siebeinsatz eingefüllt, wird das Kaffeemehl darin von Hand angedrückt, um ein gleichmässig hohes und gleichmässig verdichtetes Kaffeebett zu erzeugen. Die dabei beispielsweise von einem Barista aufzuwendende Kraft zum sogenannten Tampern unterscheidet sich unter anderem auch nach Kaffeesorte, Mahlgrad, von der Art des eingesetzten Brühsiebs und ist im erheblichen Masse entscheidend für die Qualität des Kaffees.

Nach dem Einfüllen einer Menge an Kaffeepulver bzw. Kaffeemehl in den Siebträger und manueller Verpressung wird der in einem Siebträgerhalter aufgenommene Siebträger manuell in die Kaffeemaschine eingespannt und es folgt der eigentliche Brühvorgang. Hierbei dosiert die Kaffeemaschine heisses Wasser unter Druck über ein in diese fest eingebautes Verteilerelement in den Siebträger, von dem der aufgebrühte Kaffee direkt in eine bereitgestellte Tasse abgegeben wird. Bei optimalen Bedingungen ist das Brühergebnis hinsichtlich Aroma und Crema von ausgezeichneter Qualität, doch ist sie auch in besonderem Masse Qualitätsschwankungen ausgesetzt.

In der zweiten grossen Gruppe der Espresso- und Kaffeemaschinen, den Vollautomaten, finden die Vorgänge des Mahlens, des Dosierens und des Tamperns, sowie der eigentliche Brühvorgang automatisch statt. Im Allgemeinen ist eine derartige Kaffeemaschine mit einer Einbaumühle ausgestattet, welche eine definierte Kaffeemenge je nach gewähltem Programm in eine Kolben-Zylinder-Anordnung eindosiert. Die Kolben-Zylinder-Anordnung kann aus einem Zylinder und einem oberen und einem unteren Kolben gebildet werden, jeweils Siebe aufweisend, welche auch als Brüh- bzw. Verteilersieb fungieren. Der von den Kolben verschlossene Zylinder wird mit heissem Wasser beaufschlagt, welches das verdichtete Kaffeepulver durchströmt und als Espresso oder Kaffee in eine bereitgestellte Tasse geleitet wird.

Zwar kann bei richtiger Einstellung mit den Vollautomaten eine stabile Qualität erreicht werden, allerdings stellt sich für einen Benutzer nicht wirklich ein besonderes Erlebnis ein. Ferner wird die erzeugte Qualität beispielsweise dadurch beeinträchtigt, dass die Temperatur nicht konstant hoch gehalten werden kann, da Brühgruppen aus Metall und Kunststoff je nach herrschender Temperatur unterschiedliche Energiemengen dem Brühwasser entziehen. Insbesondere nach längerem Stillstand und/oder bei kleinen Brühmengen ist die folgende erste Tasse kritisch, d.h. häufig zu kalt, der Kaffee nicht ausreichend extrahiert und ohne gute Crema. Siebträger sind im Allgemeinen massiv und aus Metall und sind direkt an einem Boiler angeflanscht, um möglichst eine gleichbleibende Temperatur zu halten. Werden sie von einem Barista von der Brühgruppe entkoppelt, werden sie beim Wiedereinsetzen durch das aufgenommene Brühwasser erwärmt, wobei die Energie nicht zur Erhitzung des aufgebrühten Kaffees zur Verfügung steht, so dass der erste Espresso keine ausreichende Temperatur hat, er ist zu kalt.

Allgemein ist die Aufbewahrung der Kaffeebohnen bzw. von Kaffeepulver ausserhalb der Espresso- und Kaffeemaschine empfehlenswert, da diese sehr temperaturempfindlich sind.

Als problematisch bei Halbautomaten erweist sich auch, dass die Dosierung einer Quantität an Kaffeemehl von einer externen Kaffeemühle Schwankungen unterliegt. So kann es durch die hygroskopische Eigenschaft von Kaffeepulver zu einem Qualitätsverlust kommen, wobei die Qualität ferner von der Dosierung und damit von einem Bedienpersonal abhängig ist.

Eine weitere Problematik liegt in der richtigen Dosiermenge an Kaffeepulver, welche in einen Siebträger eingefüllt wird. Siebträger weisen handelsüblich einen Durchmesser im Bereich von ca. 55 mm bis 58 mm auf, welche geeignet sind, Mahlgut aufzunehmen, welches ausreichend für eine Doppelportion Espresso ist. Soll aber nur eine einfache Portion hergestellt werden, muss das Sieb stark verengt werden, um eine ausreichende Höhe des verdichteten Kaffeepulvers zu erreichen. Häufig ist die Extraktion des eingefüllten Kaffeepulvers in einem solchen Fall nicht homogen genug und es kann zu einem Wasserdurchbruch (sog. Canneling) kommen, so dass der Espresso von schlechterer Qualität ist.

Bekannt sind auch Espresso- und Kaffeemaschinen, welche quasi zwischen den "Halbautomaten" und den "Vollautomaten" angesiedelt sind. Unter dem Begriff Hybrid-Systeme werden Espresso- und Kaffeemaschinen zusammengefasst, welche unterschiedliche Elemente bzw. Techniken der erwähnten Gruppen vereinen. Derartige Espresso- und Kaffeemaschinen können beispielsweise ein in die Maschine integriertes Mahlwerk und einen in eine Halterung aufnehmbaren Siebträger umfassen. Der Siebträger wird an einem Mühlenausgang mit einer Portion Kaffeepulver automatisch befüllt, in eine Brühposition gebracht, wobei das Tampern des eingefüllten Kaffeepulvers ebenfalls automatisch erfolgen kann.

So ist aus GB 2 488 327 A eine Brühvorrichtung zur Kaffeeherstellung bekannt, bei welcher ein Brühkolben in einem Brühzylinder aufgenommen und mittels eines Betätigungshebels bewegbar ist. An dem Brühkolben ist ein Deckel ausgebildet, so dass in dessen geöffneter Stellung eine definierte Menge an Brühwasser in eine Brühkammer zur Herstellung von Kaffee eingebracht wird.

Aus KR 2010/0010456 U ist eine manuelle Espressomaschine bekannt mit einer seitlich Einleitung von heissem Brühwasser in das Gehäuse der Espressomaschine, wobei das heisse Brühwasser über einen in dem Gehäuse ausgebildeten Ringkanal auf das in einer Brühkammer eingefüllte Kaffeepulver verteilt wird.

### Zusammenfassung der Erfindung

Der vorliegenden Erfindung liegt damit die Aufgabe zugrunde, eine Espresso- und Kaffeemaschine bereitzustellen, welche auf einfache Weise die Wärmeverluste des Brühwassers vor dem eigentlichen Brühvorgang minimiert. Insbesondere soll die Espresso- und Kaffeemaschine eine hohe und gleichbleibende Qualität des auszugebenden Espressos oder Kaffees ermöglichen, d.h. insbesondere Qualitätsverluste durch Schwankungen der Temperatur des Brühwassers für den eigentlichen Brühvorgang vermeiden, wobei möglichst wenig Bauteile und eine einfache Steuerung notwendig sind. Ferner ist Aufgabe der vorliegenden Erfindung ein Verfahren zum Betrieb einer Espresso- und Kaffeemaschine anzugeben. Diese Aufgaben werden durch die Merkmale der unabhängigen Ansprüche gelöst. Besonders vorteilhafte Ausführungsformen sind in den abhängigen Ansprüchen und in der Beschreibung erwähnt.

Die erfindungsgemässe Espresso- und Kaffeemaschine umfasst eine Brühkammer, Mittel zur Erzeugung und Abgabe von heissem Wasser unter Druck in die Brühkammer und einen Brühkolben zum wiederholten Verschliessen und Öffnen der Brühkammer. Die Brühkammer, die Mittel und der Brühkolben können als Brüheinheit, bzw. die Brühgruppe, betrachtet werden. Das Brühwasser wird erhitzt auf eine vorbestimmte Temperatur in die Brüheinheit eingeleitet. Die Brüheinheit umfasst einen Siebeinsatz zur Aufnahme des Extraktionsguts, d.h. des gemahlenen Kaffeepulvers.

Erfindungsgemäss ist vorgesehen, das Brühwasser seitlich in die Brüheinheit einzuleiten. Durch den dadurch realisierbaren kurzen Strömungsweg des Brühwassers bis zu seiner Verteilung über das gemahlene Kaffeepulver wird der Temperaturverlust des Brühwassers minimiert. Ferner wird vorteilhaft die Masse reduziert, die auf eine erhöhte Temperatur erwärmt werden muss, um ein stabiles Temperaturniveau des Brühwassers entlang seines Strömungswegs zu erreichen.

In der erfindungsgemässen Espresso- und Kaffeemaschine ist die Brüheinheit derart ausgebildet, dass der Brühkolben mit einer radial wirkenden Dichtung verschieblich in der Brühkammer aufgenommen ist. Hierbei ist der Brühkolben in einer Ausführungsform der Erfindung als Doppelkolben mit einem oberen Kolben und einem unteren Kolben, d.h. dem Brühkolben, ausgebildet, welche mittels einer Kolbenstange verbunden sind. Der Brühkolben ist demnach in einer Zylinder/Kolbenanordnung angeordnet, welche beispielsweise in Wirkverbindung mit Stellmitteln der erfindungsgemässen Espresso- und Kaffeemaschine steht und mittels dieser in der Brühkammer in eine Press- und/oder eine Brühstellung verbracht werden kann. Im Folgenden wird die Zylinder/Kolbenanordnung, in der der Brühkolben angeordnet ist, als zweite Zylinder/Kolbenanordnung bezeichnet. Der obere Kolben kann mit einer radial wirkenden Dichtung verschieblich in einer Fluidkammer aufgenommen sein, welche einem Fluidsystem der Espresso- und Kaffeemaschine zugeordnet sein kann, das in Wirkverbindung mit Stellmitteln zur Betätigung des Brühkolbens steht. An der derart als Doppelkolben ausgebildeten Anordnung kann ein Federelement angeordnet sein, welches eingerichtet ist, um den Doppelkolben entgegen einer auf dem oberen Kolben wirkenden hydraulischen Druckkraft zurückzustellen.

Der Brühkolben kann frei verschieblich in die bevorzugt zylindrische Brühkammer eintauchen und ein auf einem darin angeordneten Siebeinsatz, dem Auslasssieb, liegendes Kaffeepulver zu einem Kaffeekuchen definiert verdichten, d.h. tampern.

Erfindungsgemäss ist vorgesehen, dass an dem Brühkolben ein Brühwassereinlass mündet, der in fluidleitender Verbindung mit der Brühkammer steht. Der Brühkolben ist derart ausgebildet, dass möglichst nahe an einem unteren Ende des Brühkolbens, über welches das eingeleitete Brühwasser gleichmässig über das Kaffeepulver verteilt wird, beispielsweise über ein Einlasssieb, ein Anschluss für das Brühwasser vorgesehen ist. Die fluidleitende Verbindung zwischen Anschluss für das Brühwasser und Verteilung ist geprägt durch einen kurzen Strömungsweg. Darüber hinaus wird die Abgabe von Energie des Brühwassers an entlang des Strömungswegs angeordnete Komponenten reduziert. Ferner kann vorgesehen sein, dass die Zuleitung des Brühwassers sich innerhalb eines Abschnitts des Brühkolbens erstreckt, welcher als Hohlkörper ausgebildet sein kann. Die erfindungsgemässe Espresso- und Kaffeemaschine umfasst in einer Ausführungsform darüber hinaus einen Betätigungshebel, welcher zumindest teilweise von Hand bewegbar ist, wobei bei Bewegung des Betätigungshebels in eine Richtung der Brühkolben in der Brühkammer in eine Pressstellung und/oder eine Brühstellung verschoben wird.

Eine Steuereinheit kann vorgesehen sein, um Abläufe bei der Espresso bzw. Kaffeeherstellung zu steuern. Ferner kann die Espresso- und Kaffeemaschine ein Mahlwerk zur Erzeugung von Kaffeepulver, eine Dosier- und Fördereinrichtung zum Einbringen von Kaffeepulver in einen in einer Halterung der Brühkammer eingesetzten Siebträger umfassen. Einzelne Bauteile, insbesondere eine Bevorratung von Kaffeebohnen, das Mahlwerk und die Dosier- und Fördereinrichtung, können in einem Gehäuse der Maschine integriert sein. Hierbei bedeutet integriert nicht, dass alle Bauteile im Inneren des Gehäuses angeordnet sind. So kann z.B. der dem Mahlwerk zugeordnete Behälter zur Aufbewahrung von Kaffeebohnen zumindest teilweise ausserhalb des Gehäuses positioniert sein. Befindet sich die Brühgruppe ausserhalb eines Gehäuses der Espresso- und Kaffeemaschine, kann ein Erhitzen der bevorrateten Kaffeebohnen im Wesentlichen eliminiert werden.

Die Espresso- und Kaffeemaschine zeichnet sich dadurch aus, dass Stellmittel mit einem Fluidsystem vorgesehen sind, welche mindestens eine erste Zylinder/Kolbenanordnung umfassen, wobei der Betätigungshebel derart in Wirkverbindung mit einem Kolben der ersten Zylinder/Kolbenanordnung und mit Stellmitteln steht, dass bei Bewegung des Betätigungshebels in eine Richtung Druck in dem Fluidsystem aufgebaut wird, wobei der in der zweiten Zylinder/Kolbenanordnung angeordnete Brühkolben in der Brühkammer in die Pressstellung und/oder die Brühstellung verschoben wird.

Mittels einer Kopplung der Bewegung des Betätigungshebels mit den Stellmitteln kann erfindungsgemäss sowohl ein Tampern als auch ein Brühvorgang aktiviert werden. Der erfindungsgemässe Betätigungshebel vermittelt den Eindruck einer unmittelbaren Beteiligung an dem Kaffeeherstellungsprozess, wie dies als vorteilhaft bei Halbautomaten empfunden wird.

Die Stellmittel umfassen mindestens eine erste Zylinder/Kolbenanordnung. In einer Ausführungsform ist die erste Zylinder/Kolbenanordnung direkt mit dem Betätigungshebel gekoppelt.

Das Fluidsystem kann einen Ausgleichsbehälter und einen Drucksensor umfassen, welche eingerichtet sind, um den Druck in dem Fluidsystem zu erfassen und auf einen definierten Wert einstellen zu können. Hierbei kann eine vorhandene Steuereinheit entsprechende Vorgänge steuern, wie dies noch erläutert wird.

Vorzugsweise ist das Fluidsystem ein Hydrauliksystem mit einem Hydraulikfluid. Das Fluid ist bevorzugt Hydrauliköl, welches für einen Einsatz im Bereich von Lebensmitteln geeignet ist. Denkbar ist aber auch, dass anstelle eines Hydrauliksystems ein Pneumatiksystem Verwendung findet, um die an eine Bewegung des Betätigungshebels gekoppelten Abläufe zur Espresso und/oder Kaffeeherstellung in Gang zu setzen. Das Fluidsystem bzw. bevorzugt das Hydrauliksystem kann neben dem Ausgleichsbehälter ebenfalls eine Drossel umfassen, sowie mindestens ein erstes Ventil und Mittel zum Befüllen des Fluidsystems mit Fluid, vorzugsweise mit Hydraulikfluid. Der Ausgleichsbehälter steht mittels eines Leitungssystems in Fluidverbindung mit der ersten Zylinder/Kolbenanordnung und der den Brühkolben umfassenden Anordnung, der zweiten Zylinder/Kolbenanordnung.

Denkbar ist auch, dass der Brühkolben, welcher der zweiten Zylinder/Kolbenanordnung zugeordnet ist, durch eine Antriebseinheit z.B. ein Schrittmotor im Rahmen der Kaffeeherstellung bewegt wird, wobei die Bewegung des Brühkolbens zumindest indirekt an eine Bewegung des Betätigungshebels gekoppelt und von der Steuereinheit gesteuert sein kann.

Der Brühkolben ist in der zweiten Zylinder/Kolbenanordnung angeordnet, wobei der Brühkolben mit einer radial wirkenden Dichtung verschieblich in der Brühkammer aufgenommen ist und mit einer Kolbenstange mit einem oberen Kolben mit einer radial wirkenden Dichtung verbunden ist, welcher verschieblich in einer Fluidkammer aufgenommen ist. An der derart als Doppelkolben ausgebildeten Anordnung ist ein Federelement angeordnet, welches eingerichtet ist, um den Doppelkolben entgegen einer auf dem oberen Kolben wirkenden hydraulischen Druckkraft zurückzustellen.

Der Brühkolben kann frei verschieblich in die bevorzugt zylindrische Brühkammer eintauchen und ein auf einem darin angeordneten Siebeinsatz liegendes Kaffeepulver zu einem Kaffeekuchen definiert verdichten, d.h. tampern.

Die durch den Brühkolben aufzubringende Anpresskraft für das Verdichten des eingefüllten Kaffeemehls ist bevorzugt einstellbar, wobei auch die Übersetzungsverhältnisse der Kolbenanordnung entsprechend wählbar sind. Das Fluidsystem ist eingerichtet, um die Tamperkraft d.h. den Anpressdruck einzustellen. So kann bei Erreichen der Tamperkraft bzw. dem definierten Anpressdruck, ermittelt von dem Drucksensor und der Steuereinheit angezeigt, entsprechenden Mitteln aktiviert werden, so dass der Druck in dem Fluidsystem nicht weiter erhöht wird und der Brühkolben in einer definierten Stellung präzise positioniert ist.

Die Stellung des Brühkolbens sollte unter anderem dann variiert werden, wenn ein eintretendes Aufquellen des Kaffeemehls, je nach Produkt bei einem als Vorbrühen bezeichneten Vorgang, zu beachten ist. Bei manchen Zubereitungsformen ist auch ein eventuelles wiederholtes Nachpressen vorgesehen, um zu einer verbesserten Qualität zu gelangen.

Erfindungsgemäss ist vorgesehen, dass zur Herstellung bestimmter Kaffeespezialitäten, nach dem Vorgang des Verpressens, d.h. des Tamperns, der Brühkolben wieder leicht von der Oberfläche des Kaffeekuchens zurückgefahren wird. Dies kann erreicht werden, in dem Einrichtungen im Fluidsystem umfasst sind, welche eine Reduzierung des auf dem Brühkolben wirkenden Druck veranlassen. Hierfür ist in einer Leitung des Fluidsystems ein Ventil vorgesehen, welches in Offenstellung den in dem Fluidsystem auf den Brühkolben wirkenden Druck reduziert. Bei zumindest kurzzeitig geöffnetem Ventil strömt Fluid aus der Fluidkammer zurück in das Fluidsystem, insbesondere in den Ausgleichsbehälter, so dass der Brühkolben, bedingt durch die Federkraft des Federelements von der Oberfläche des Kaffeekuchens hochfährt.

Mit dem erfindungsgemässen Fluidsystem wird eine definierte Positionierung des Brühkolbens ermöglicht. Einerseits kann demnach die Anpresskraft begrenzt und andererseits die Position des Brühkolbens bei einem Brühvorgang beliebig festgelegt werden. Dies erweitert die Vielfalt der mit der erfindungsgemässen Espresso- und Kaffeemaschine herzustellenden Kaffeespezialitäten

Erfindungsgemäss wird bei einer beispielsweisen manuellen Bewegung des Betätigungshebels aus einer Startposition, z.B. einer oberen Stellung, in Richtung einer Endposition, z.B. einer unteren Stellung, durch die Wirkverbindung mit Stellmitteln Fluid in die Fluidkammer der zweiten Zylinder/Kolbenanordnung gefördert. Bei einer entgegengesetzten Bewegung des Betätigungshebels, welche bevorzugt bei aufgehobener Kraft am Betätigungshebel automatisch erfolgt, d.h. ausgehend von der Endposition, wird durch ein Rückstellen des Doppelkolbens der zweiten Zylinder/Kolbenanordnung das Fluid aus der Fluidkammer gedrückt.

Der Betätigungshebel kann über ein Hebel- und Federsystem mit den Stellmitteln in Wirkverbindung stehen, wobei dieses ein Schwenklager umfasst, um welches der Betätigungshebel verschwenkbar ist und eine Gelenkverbindung, welche mechanisch mit mindestens einem der Stellmittel, insbesondere mit dem Kolben der ersten Zylinder/Kolbenanordnung, gekoppelt ist. Wird der Betätigungshebel durch ein Bedienpersonal von der Startposition in Richtung Endposition bewegt, werden durch die assoziierten Wirkverbindungen Abläufe der Espresso- bzw. Kaffeeherstellung in Gang gesetzt.

In einer Ausführungsform wird durch den Hebel- und Federsystem und/oder den Stellmitteln zumindest teilweise aufeinander folgende Abläufe der Espresso- und Kaffeeherstellung an die Bewegung des Betätigungshebels gekoppelt. Optional kann einer der Abläufe umfassen, dass eine definierte Menge an frisch gemahlenem Kaffeepulver mittels einer Dosier- und Fördereinrichtung in einen bereitgestellten Siebeinsatz eines Siebträgers dosiert bzw. gefördert wird. Hierbei kann ein Mechanismus vorgesehen sein, welcher mit einer Dosier- und Fördereinrichtung in Wirkverbindung gebracht werden kann, so dass die Dosier- und Fördereinrichtung entsprechend in eine Einfüllstellung bringbar und/oder aus dieser entfernbar ist.

In einer bevorzugten Ausführungsform ist vorgesehen, dass zumindest teilweise die aktivierten Abläufe entkoppelt von der auf dem Betätigungshebel wirkenden Kraft ablaufen. So wird eine gleichbleibende Qualität des Kaffeeerzeugnisses garantiert. Dabei löst die Bewegung des Betätigungshebels, welcher auch nachfolgend als Kniehebel bezeichnet wird, eine Abfolge von Vorgängen aus, welche zumindest teilweise automatisch erfolgen. Bei dieser Ausführungsform ist die Bewegung des Kniehebels in einer Richtung mit der ersten Zylinder/Kolbenanordnung derart gekoppelt, dass Fluid des Fluidsystems in den Ausgleichsbehälter bewegt wird. Darüber hinaus wird durch Betätigung des Kniehebels eine Schaltung aktiviert, welche Stellmittel unabhängig von der ersten Zylinder/Kolbenanordnung automatisch betätigen, so dass die Abläufe zur Herstellung von Espresso oder Kaffee in Gang gesetzt werden.

Vorgesehen ist, dass bei der Bewegung des Betätigungshebels aus der Startposition eine Pumpe geschaltet wird, welche in dem Fluidsystem angeordnet und eingerichtet ist, um Fluid aus dem Ausgleichsbehälter unter Druck in die zweite Zylinder/Kolbenanordnung zu fördern. Stromabwärts der Pumpe können ein Rückschlagventil und der Drucksensor angeordnet sein, stromaufwärts ein Durchflusssensor. Mittels des aufgebrachten Drucks im Fluidsystem wird der Brühkolben der zweiten Zylinder/Kolbenanordnung in eine Stellung bewegt, in welcher das auf den Siebeinsatz gefüllte Kaffeepulver mit einem Anpressdruck verdichtet wird. Zur Begrenzung des Anpressdrucks ist der Drucksensor eingerichtet, um zu veranlassen, dass die Förderung des Fluid unterbrochen wird, wenn ein definierter Anpressdruck bzw. ein bestimmter Druck im Fluidsystem erreicht ist. Hierfür kann beispielsweise die Pumpe ausgeschaltet werden.

In einer bevorzugten Ausführungsform ist vorgesehen, dass der Brühkolben in jeder Position entlang seines Verfahrweges positioniert werden kann. Erreicht wird dies, beispielsweise mittels dem in dem Fluidsystem angeordneten Durchflussmesseinrichtung und der zugeordneten Steuereinheit.

Nach dem Verpressen des Kaffeepulvers zu einem weitgehend homogenen Kaffeekuchen folgt der eigentliche Brühvorgang in der mittels des Brühkolbens verschlossenen Brühkammer. Ein mit der Brühkammer hydraulisch verbundener Heisswasserbereiter versorgt die Brühkammer mit aufgeheiztem und eventuell mit definiertem Druck von vorzugsweise 1 bis 9 bar beaufschlagtem Wasser. Das Brühwasser wird bevorzugt seitlich in die Brüheinheit eingebracht wird. Durch den dadurch realisierbaren kurzen Strömungsweg des Wassers wird der Temperaturverlust des Wassers zwischen Boiler bzw. Wassererhitzer bis zur Brühkammer minimiert. Somit reduziert sich vorteilhaft die Masse, die auf eine erhöhte Temperatur erwärmt werden muss, um ein stabiles Temperaturniveau zu erreichen. Das Wasser wird über die Oberfläche des in dem Siebträger befindlichen und verdichteten Kaffeepulvers möglichst gleichmässig verteilt, durchströmt den Kaffeekuchen, den Siebeinsatz und tritt nach unten aus, beispielsweise über eine Auslauföffnung in eine bereitgestellte Tasse.

Der eigentliche Brühvorgang kann variabel gestaltet sein, wobei die Stellung des Brühkolbens als ein Schliessorgan der Brühkammer den diversen Kaffeezubereitungsarten angepasst wird. Insbesondere kann vorgesehen sein, dass die Brühkammer nach einem ersten Brühvorgang leicht geöffnet wird, insbesondere dann, wenn keine Crema zwingend verlangt wird. Anschliessend wird diese wieder geschlossen, wobei eine erneute Verpressung des sogenannten Kaffeetresters erfolgt. Somit wird ein trockener Kaffeekuchen erzeugt, welcher leichter aus einem Siebeinsatz zu entsorgen ist und der Siebträger weniger verunreinigt wird. Dies vermeidet eine aufwendige Reinigung. Vorgesehen ist, dass der gesamte Brühvorgang weitgehend automatisch und unter gleichbleibenden Bedingungen erfolgt.

In einer Ausführungsform ist vorgesehen, dass die erfindungsgemässe Espresso- und Kaffeemaschine ein Bypass-System umfasst, welches eingerichtet ist, um das heisse, unter Druck stehende Wasser in einen Extraktionsstrom und einen Bypass-Strom zu teilen. Verwendung findet dieses System zur Erzeugung einer grösseren Menge an Kaffee, beispielsweise bezeichnet als Americano oder Frühstückskaffee. Der Extraktionsstrom wird derart in die Brühkammer bzw. über das in dem Siebträger eingebrachte Kaffeepulver verteilt, dass Kaffee aus dem Kaffeepulver extrahiert wird. Der Bypass-Strom wird nicht über das Kaffeepulver verteilt, sondern an diesem vorbei gelenkt und erst an einer geeigneten stromabwärts gelegenen Stelle mit dem aus der Brühkammer stammenden Kaffeestrom zusammengeführt und der Auslauföffnung zugeführt. Hierfür kann an einer Wand des Siebträgers eine fluidleitende Verbindung vorgesehen sein, in welche ein Teil des Brühwassers, der Bypass-Strom, eingeleitet, an dem Siebträger vorbei und in einen Auslaufbereich des aus dem Siebträger austretenden Kaffees geleitet wird. Vorteilhaft kann vorgesehen sein, hierfür eine andere Temperatur zu wählen, da sich die beschriebene Zubereitung von derjenigen zur Espressoherstellung unterscheidet. Das Bypass-System erhöht demnach die Vielfalt einer mit der erfindungsgemässen Espresso- und Kaffeemaschine herstellbaren Produktpalette.

Ferner kann die erfindungsgemässe Espresso- und Kaffeemaschine einen Behälter zur Aufbewahrung von Kaffeebohnen umfassen, wobei dieser Behälter einen Ventilator aufweist. Der Ventilator sorgt für eine Belüftung der bevorrateten Kaffeebohnen, wobei diese dabei auch gekühlt werden. Belüftung und Kühlung begünstigen die Qualitätssicherung der temperaturempfindlichen Kaffeebohnen.

Ein Mahlwerk bzw. eine Mühle und die Brühkammer sind in der erfindungsgemässen Espresso- und Kaffeemaschine getrennt voneinander angeordnet, so dass in jedem Bereich eine geeignete Temperatur herrscht. Insbesondere ist die Brühkammer ausserhalb des die Espresso- und Kaffeemaschine begrenzenden Gehäuses an einer Frontseite desselben angeordnet. Das Mahlwerk bzw. die Mühle ist im Inneren des Gehäuses angeordnet und von der Brühkammer sowohl durch die Frontseite des Gehäuses als auch durch die Dosiereinrichtung räumlich getrennt.

Ferner ist eine Luftführungseinrichtung vorgesehen, so dass warme Luft aus dem Inneren der Espresso- und Kaffeemaschine nach aussen geführt wird, welches zusätzlich zur Temperaturreduzierung im Inneren beiträgt. Die abströmende Luft kann den Kaffeeduft in die Umgebung verbreiten.

Es kann vorgesehen sein, dass Luft aus der Umgebung angesaugt und durch einen Luftspalt eines doppelwandig ausgebildeten Bohnenbehälters und dem sich daran anschliessenden Mahlwerk geführt wird, so dass ein Erwärmen der Kaffeebohnen in dem Bohnenbehälter und in dem Mahlwerk und dem eigentlichen Mahlwerk selbst vermieden wird.

Der in einer Halterung der Brühkammer aufgenommene Siebträger weist bevorzugt einen Durchmesser im Bereich von 35 bis 50 mm auf. Der Durchmesser unterscheidet sich von demjenigen des Standes der Technik, welcher verwendet wird, um bei einer Befüllung von ca. 6 bis 9 g Kaffeepulver für eine einzige Tasse ein ausreichend hohes und homogenes Kaffeebett zu erzeugen. Die in den Siebträger eingebrachte Menge an Kaffeepulver kann variieren, je nachdem ob lediglich eine Portion mit ca. 6 bis 9 g Kaffeepulver hergestellt wird oder eine Doppelportion mit ca. 13 bis 20 g.

Die Öffnungen bzw. Löcher eines in den Siebträger aufnehmbaren Siebeinsatzes müssen so dimensioniert sein, dass Kaffeewasser noch aus den Öffnungen bzw. Löchern abfliessen kann, aber die einzelnen Kaffeepulverkörner zurückgehalten werden. Die Öffnungen bzw. Löcher können mittels eines Ätzverfahrens erzeugt werden, wobei deren Verteilung, Form und Anzahl nahezu beliebig variiert werden kann. Somit kann erreicht werden, dass die offene Siebfläche des Siebeinsatzes vergrössert ist und die Extraktion des Kaffees damit deutlich verbessert wird.

Das erfindungsgemässe Verfahren zur Herstellung von Espresso und/oder Kaffee mit der Espresso- und Kaffeemaschine, welche eine Brühkammer, Mittel zur Erzeugung und Abgabe von heissem Wasser unter Druck in die Brühkammer und einen Brühkolben zum wiederholten Verschliessen und Öffnen der Brühkammer umfasst und einen Betätigungshebel und Stellmittel mit einem Fluidsystem, mindestens eine erste Zylinder/Kolbenanordnung umfassend, wobei der Betätigungshebel zumindest teilweise von Hand bewegbar ist und derart in Wirkverbindung mit Stellmitteln steht, dass bei Bewegung des Betätigungshebels in eine Richtung Druck in dem Fluidsystem aufgebaut wird, wobei der in einer zweiten Zylinder/Kolbenanordnung angeordnete Brühkolben in der Brühkammer in eine Pressstellung und/oder eine Brühstellung verschoben wird, umfasst Einsetzen eines Siebträgers in eine dafür vorgesehene Halterung an der Brühkammer, in welchen mit einem Mahlwerk erzeugtes Kaffeepulver einfüllbar ist. Eine manuelle Bewegung des Betätigungshebels von einer Startposition in eine Endposition und Erzeugen von Druck in dem Fluidsystem durch eine Wirkverbindung des Betätigungshebels mit den Stellmitteln. Die Brühkammer wird durch den Brühkolben verschlossen, welcher durch den von den Stellmitteln erzeugten Druck beaufschlagt ist. Es folgt ein Verpressen des Kaffeepulvers in dem Siebträger zu einem Kaffeekuchen durch den mit Druck beaufschlagten Brühkolben mit einem definierten Anpressdruck. Anschliessend wird erhitztes auf dem verpressten Kaffeepulver verteilt. Ist der Brühvorgang beendet, beispielsweise wenn eine definierte Menge an Kaffee abgegeben wurde, fährt der Brühkolben selbstständig zurück in die Startposition. Nachfolgend kann der in dem Siebträger verbleibende Kaffeetrester entfernt werden. Dies kann durch Ausklopfen von Hand erfolgen.

In einer bevorzugten Ausführungsform erfolgt das Entfernen des Kaffeetresters automatisch. Bei einer semiautomatischen Entfernung des Kaffeetresters ist es nicht erforderlich, dass der Siebträger aus der Halterung entnommen wird. Mittels einem an dem Siebträger angeordneten Handgriff wird der Siebträger in der Halterung soweit gedreht, dass eine an die Bewegung gekoppelte Einrichtung den Kaffeetrester in einen bereitgestellten Behälter schiebt. Die Rückstellung des Siebträgers veranlasst eine Rückstellung der gekoppelten Einrichtung.

### Kurzbeschreibung der Zeichnungen

Im Folgenden wird die Erfindung anhand der in den Figuren dargestellten Ausführungsbeispiele näher erläutert. Es zeigen:
Fig. 1 eine schematische Darstellung einer erfindungsgemässen Espresso- und Kaffeemaschine gemäss einer ersten Ausführungsform; Fig. 2 eine schematische Darstellung einer erfindungsgemässen Espresso- und Kaffeemaschine gemäss einer zweiten Ausführungsform; und
Fig. 3a bis 3c Detailansichten eines Siebträges der erfindungsgemässen Espresso- und Kaffeemaschine zur Verdeutlichung der automatischen Entfernung des Kaffeetresters.

### Detaillierte Beschreibung der Ausführungsformen der Erfindung

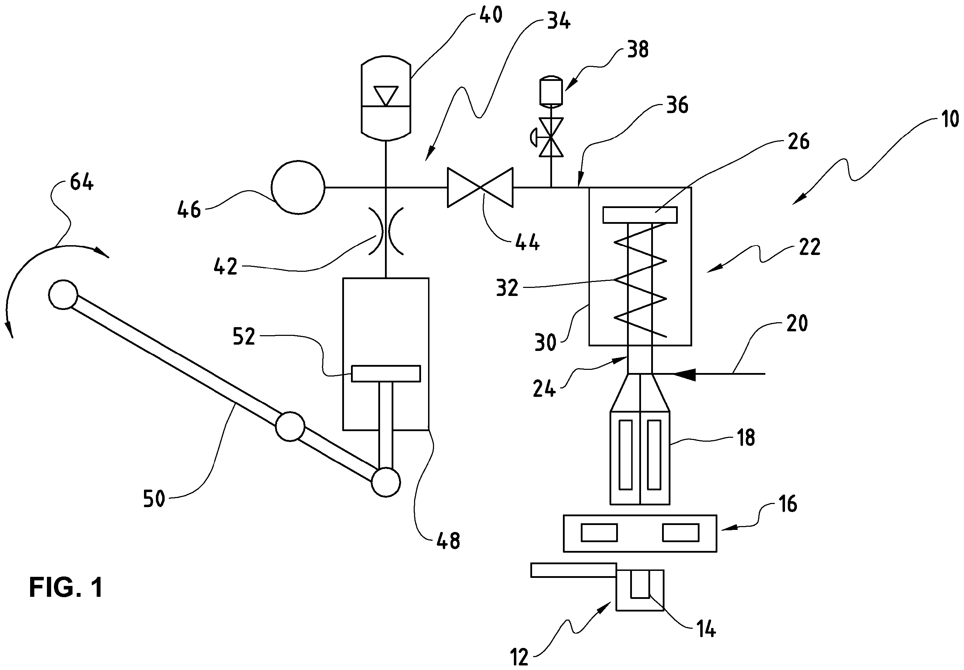

In Fig. 1 ist schematisch eine erfindungsgemässe Espresso- und Kaffeemaschine dargestellt, kurz als Maschine 10 bezeichnet. Die rein schematisch dargestellte Maschine 10 umfasst eine Halterung, in welche ein Siebträger 12 einsetzbar ist. Der eingesetzte Siebträger 12 ist nach oben gegen eine Brühkammer 16 offen und nach unten schliesst sich ein Auslauf mit einer Abgabeöffnung an (nicht dargestellt). In den Siebträger 12 ist ein Siebeinsatz 14 aufnehmbar. Der Siebträger 12 ist derart ausgebildet, dass er in der Halterung beispielsweise durch einen Bajonett-Verschluss eingesetzt und dichtend gehalten werden kann. In bekannter Weise kann der Siebträger 12 mit einem seitlichen Handgriff versehen sein. Die Brühkammer 16 wird mit heissem unter Druck stehendem Wasser beaufschlagt, angedeutet mit Pfeil 20. In der Brühkammer 16 ist ein Brühkolben 18 verschieblich gelagert, welcher einer zweiten Zylinder/Kolbenanordnung 22 zugordnet ist.

Eine zweite Zylinder/Kolbenanordnung 22 umfasst einen Doppelkolben 24, dessen unterer Kolben als Brühkolben 18 ausgebildet und in der Brühkammer 16 verschieblich aufgenommen ist und einen oberen Kolben 26, welcher verschieblich in einer Fluidkammer bzw. einer Hydraulikkammer 30 aufgenommen ist. Unterer und oberer Kolben 18, 26 sind durch eine starre Kolbenstange miteinander verbunden. Der obere Kolben 26 wird von einem Federelement 32 nach oben gedrückt. An dem oberen Kolben 26 und dem unteren Kolben bzw. dem Brühkolben 18 sind jeweils radial wirkende Dichtungen vorgesehen. Die Hydraulikkammer 30 ist mit einem Fluid- bzw. Hydrauliksystem verbunden, bezeichnet allgemein mit 34. In dem Hydrauliksystem 34 strömt in einem Leitungssystem 36 ein Hydraulikfluid. Das Hydrauliksystem 34 umfasst Mittel 38 zum Befüllen des Hydrauliksystems 34, sowie einen Ausgleichsbehälter 40. Ferner sind in dem Leitungssystem 36 eine Drossel 42, ein Ventil 44 und ein Drucksensor 46 angeordnet. Das Leitungssystem 36 verbindet die zweite Zylinder/Kolbenanordnung 22 mit einer ersten Zylinder/Kolbenanordnung 48, so dass das Hydraulikfluid zwischen den beiden Zylinder/Kolbenanordnungen 22, 48 strömen kann.

Verbunden mit der ersten Zylinder/Kolbenanordnung 48 ist ein Betätigungshebel 50. Wird der Betätigungshebel 50 von einer Startposition in eine Endposition bewegt, angedeutet mit Pfeil 64, überträgt sich die Bewegung auf einen Hydraulikkolben 52 der ersten Zylinder/Kolbenanordnung 48 derart, dass Hydraulikfluid aus der Zylinder/Kolbenanordnung 48 in das Leitungssystem 36 des Hydrauliksystems 34 mit einem sich aufbauenden Druck gedrückt wird. Das Ventil 44 ist geöffnet. Dadurch wird der Druck auf den oberen Kolben 26 der zweiten Zylinder/Kolbenanordnung 22 derart erhöht, dass der Doppelkolben 24 nach unten entgegen der Federkraft des Federelements 32 verschoben wird. Der Brühkolben 18 fährt in die Brühkammer 16 ein und verpresst beispielsweise das auf dem Siebeinsatz 14 eingefüllte Kaffeepulver zu einem Kaffeekuchen bzw. dichtet die Brühkammer 16 für den Brühvorgang ab. Der Drucksensor 46 erfasst den herrschenden Druck in dem Hydrauliksystem 34 und kann ein Signal an eine (nicht dargestellte) Steuereinheit übermitteln, welche das Ventil 44 schliesst, wenn ein vorbestimmter Druck erreicht ist.

Ist der Brühvorgang beendet, wird das Ventil 44 geöffnet und das Hydraulikfluid strömt in umgekehrter Richtung zurück in die erste Zylinder/Kolbenanordnung 48, wobei der Betätigungshebel 50 sich zurück in die Startposition bewegt, unterstützt von einem Federelement (nicht dargestellt). Eventuell in das Hydrauliksystem 34 eingebrachte Luft, z.B. bei einer fehlerhaften Handhabung, sammelt sich in dem Ausgleichsbehälter 40.

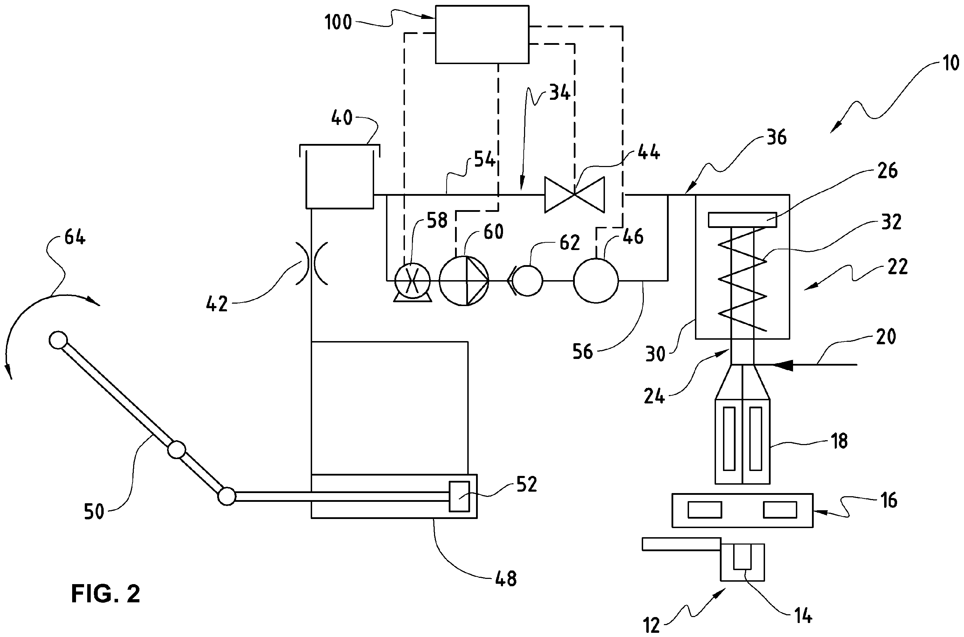

Eine zweite Ausführungsform einer Espresso- und Kaffeemaschine ist in Fig. 2 dargestellt. Gleiche Elemente werden mit den gleichen Bezugszeichen bezeichnet. Gekoppelt an die Bewegung des Betätigungshebels 50 bewegt sich der Hydraulikkolben 52 der ersten Zylinder/Kolbenanordnung 48, wobei Hydraulikfluid über die Drossel 42 in den Ausgleichsbehälter 40 gefördert wird. Ausgehend von dem Ausgleichsbehälter 40 schliesst sich das Leitungssystem 36 an, welches den Ausgleichsbehälter 40 mit der zweiten Zylinder/Kolbenanordnung 22 fluidleitend verbindet. Die zweite Zylinder/Kolbenanordnung 22 entspricht in ihrem Aufbau der in Fig. 1 dargestellten Ausführungsform. Die fluidleitende Verbindung des Ausgleichzylinders 40 mit der Hydraulikkammer 30 der zweiten Zylinder/Kolbenanordnung 22 umfasst zwei Strömungswege. Ein erster Strömungsweg 54 führt über das Ventil 44. Ein zweiter Strömungsweg 56 führt von dem Ausgleichsbehälter 40 über eine Durchflussmesseinrichtung 58, eine Pumpe 60, ein Rückschlagventil 62 und den Drucksensor 46. Wird der Betätigungshebel 50 von einer Startposition in eine Endposition, angedeutet mit Pfeil 64 bewegt, drückt der Hydraulikkolben 52 das Hydraulikfluid in den Ausgleichsbehälter 40. Gleichzeitig wird von einer Steuereinheit 100 ein Signal an die Pumpe 60 übermittelt, so dass diese einschaltet und Hydraulikfluid aus dem Ausgleichsbehälter 40 in die Hydraulikkammer 30 fördert. Der dabei sich aufbauende Druck in dem Hydrauliksystem 34 wird von dem Drucksensor 46 erfasst. Bei Erreichen eines vorbestimmten Drucks erfolgt über die Steuereinheit ein Ausschalten der Pumpe 60. Der vorbestimmte Druck kann dabei dem Anpressdruck entsprechen, der erforderlich ist für das Verdichten des in dem Siebeinsatz 14 eingefüllten Kaffeepulvers und welcher mittels des Verfahrens des Brühkolbens 18 ausgeübt wird. Bei Ende des Brühvorgangs kann mittels der Steuereinheit das Ventil 44 geöffnet werden, der Druck in der Hydraulikkammer 30 wird abgebaut, der Doppelkolben 24 fährt aufgrund des Federelements 32 nach oben und das Hydraulikfluid gelangt über den Ausgleichsbehälter 40 in die erste Zylinder/Kolbenanordnung 48 und erwirkt eine Bewegung des Betätigungshebels 50 zurück in die Startposition, wobei die Bewegung auch durch ein Federelement (nicht dargestellt) unterstützt wird.

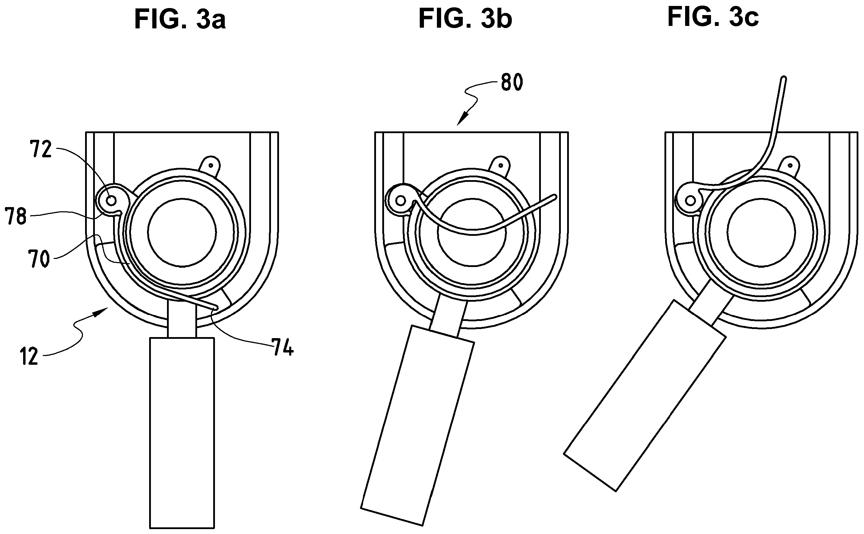

In den Figuren 3a bis 3c sind einzelne Schritte dargestellt, welche eine zumindest teilweise automatische Entfernung des nach einem Brühvorgang zurückbleibenden Kaffeetresters aus dem Siebträger 12 zeigt. Im Inneren des Siebträgers 12 ist ein Schieber 70 mit einem Ende drehbar um eine Drehachse 72 aufgenommen. Ein zweites Ende 74 ist in einer Aufnahme 76 aufgenommen. Wird nun der Siebträger 12 in eine andere Stellung in der Halterung gebracht, d.h. wird er in der Halterung in Umfangsrichtung des Siebträgers 12 verschoben, wird das Ende 74 aus der Aufnahme 76 freigegeben. Die Drehbewegung des Schiebers 70 um die Drehachse 72 ist beispielsweise mittels eines Federelements 78 an die Bewegung des Siebträgers 12 in der Halterung derart gekoppelt, so dass sich der Schieber 70 um die Drehachse 72 dreht und dabei den Kaffeetrester in Richtung einer Öffnung 80 schiebt, aus welcher der Kaffeetrester aus dem Siebträger 12 entfernt wird.

## Patentansprüche

1. Espresso- und Kaffeemaschine (10) mit einer Brüheinheit, umfassend
eine Brühkammer (16),
Mittel zur Erzeugung und Abgabe von heissem Brühwasser unter Druck in die Brühkammer (16),
einen Brühkolben (18) zum wiederholten Verschliessen und Öffnen der Brühkammer (16), und zum Verschieben des Brühkolbens (18) in der Brühkammer (16) in eine Pressstellung und/oder eine Brühstellung, wobei die Brüheinheit derart ausgebildet ist, dass das Brühwasser seitlich in die Brüheinheit einleitbar ist
**dadurch gekennzeichnet,**
**dass** das Brühwasser mittels einem an einem unteren Ende des Brühkolbens (18) vorgesehenen Brühwassereinlass einleitbar ist.

2. Espresso- und Kaffeemaschine (10) nach Anspruch 1, **dadurch gekennzeichnet, dass** der Brühkolben (18) als Hohlzylinder ausgebildet ist, wobei der Einlass des Brühwassers im Inneren des Hohlzylinders an einem unteren Bereich vorgesehen ist.

3. Espresso- und Kaffeemaschine (10) nach Anspruch 1 oder 2, ferner umfassend einen Betätigungshebel (50), welcher zumindest teilweise von Hand bewegbar ist, wobei bei Bewegung des Betätigungshebels (50) in eine Richtung der Brühkolben (18) in der Brühkammer (16) in eine Pressstellung und/oder eine Brühstellung verschoben wird, und Stellmittel mit einem Fluidsystem (34) umfasst, welche mindestens eine erste Zylinder/Kolbenanordnung (48) umfassen, wobei der Betätigungshebel (50) derart in Wirkverbindung mit einem Kolben (52) der ersten Zylinder/Kolbenanordnung (48) und mit Stellmitteln steht, dass bei Bewegung des Betätigungshebels (50) in eine Richtung Druck in dem Fluidsystem (34) aufgebaut wird, wobei der in einer zweiten Zylinder/Kolbenanordnung (22) angeordnete Brühkolben (18) in der Brühkammer (16) in die Pressstellung und/oder die Brühstellung verschoben wird.

4. Espresso- und Kaffeemaschine (10) nach Anspruch 3, **dadurch gekennzeichnet, dass** das Fluidsystem (34) einen Ausgleichsbehälter (40) und einen Drucksensor (46) umfasst.

5. Espresso- und Kaffeemaschine (10) nach Anspruch 4, **dadurch gekennzeichnet, dass** die Stellmittel ferner eine Pumpe (60) umfassen, welche in Wirkverbindung mit dem Betätigungshebel (50) schaltbar und fluidleitend mit dem Ausgleichsbehälter (40) verbunden ist, wobei die Pumpe (60) eingerichtet ist, um Druck in dem Fluidsystem (34) aufzubauen.

6. Espresso- und Kaffeemaschine (10) nach einem der Ansprüche 3 bis 5, **dadurch gekennzeichnet, dass** der in der zweiten Zylinder-Kolbenanordnung (22) angeordnete Brühkolben (18mit einer radial wirkenden Dichtung verschieblich in der Brühkammer (16) aufgenommen ist und mit einer Kolbenstange mit einem oberen Kolben (26) mit einer radial wirkenden Dichtung verbunden ist, welcher verschieblich in einer Fluidkammer (30) aufgenommen ist.

7. Espresso- und Kaffeemaschine (10) nach einem der Ansprüche 3 bis 6, **dadurch gekennzeichnet, dass** in dem Fluidsystem (34) ein Drucksensor (46) angeordnet ist, um den Druck in dem Fluidsystem (34) zu erfassen, welcher auf einen definierten Wert einstellbar ist.

8. Espresso- und Kaffeemaschine (10) nach Anspruch 7, **dadurch gekennzeichnet, dass** der Druck auf den definierten Wert mittels eines schaltbaren Ventils (44) einstellbar ist, welches in dem Fluidsystems (34) angeordnet ist.

9. Espresso- und Kaffeemaschine (10) nach Anspruch 8, **dadurch gekennzeichnet, dass** bei geöffnetem Ventil (44) Fluid von der zweiten Zylinder/Kolbenanordnung (22) in den Ausgleichsbehälter (40) gefördert wird, wobei der obere Kolben (26) mittels einer Federkraft eines angeordneten Federelements (32) nach oben verschoben wird.

10. Espresso- und Kaffeemaschine (10) nach einem der Ansprüche 3 bis 9, **dadurch gekennzeichnet, dass** das Fluid lebensmitteltaugliches Hydrauliköl ist.

11. Espresso- und Kaffeemaschine (10) nach einem der Ansprüche 1 bis 10 **dadurch gekennzeichnet, dass** ein Bypass-Brühsystem eingerichtet ist, um das in den Brühkolben eingeleitete heisse Wasser in einen Extraktionsstrom und einen Bypass-Strom zu teilen, welcher an dem in der Brühkammer (16) befindlichen Kaffeepulver vorbei geleitet wird und wobei beide Ströme stromabwärts zusammengeführt werden.

12. Verfahren zum Betreiben der Espresso- und Kaffeemaschine (10) nach einem der Ansprüche 3 bis 11 umfassend die folgenden Schritte:
- Einsetzen eines Siebträgers (12) in eine dafür vorgesehene Halterung an einer Brühkammer (16), in welchen mit einem Mahlwerk erzeugtes Kaffeepulver einfüllbar ist;
- Manuelles Bewegen eines Betätigungshebels (50), angeordnet an der Espresso- und Kaffeemaschine, von einer Startposition in eine Endposition;
- Erzeugen von Druck in einem Fluidsystem (34) durch eine Wirkverbindung des Betätigungshebels (50) mit Stellmitteln der Espresso- und Kaffeemaschine (10), mindestens umfassend eine erste Zylinder/Kolbenanordnung;
- Verschliessen der Brühkammer (16) durch den in einer zweiten Zylinder/Kolbenanordnung angeordneten Brühkolben (18), welcher durch den von den Stellmitteln erzeugten Druck beaufschlagt ist;
- Verpressen des Kaffeepulvers in dem Siebträger (12) zu einem Kaffeekuchen durch den mit Druck beaufschlagten Brühkolben (18) mit einem definierten Anpressdruck;
- Verteilung von heissem Wasser auf dem verpressten Kaffeepulver in dem Siebträger (12);
- Selbstständiges Bewegen des Betätigungshebels (50) zurück in die Startposition; und
- Entfernen von Kaffeetrester aus dem Siebträgers (12).

13. Verfahren nach Anspruch 12, **dadurch gekennzeichnet, dass** nach dem Verpressen des Kaffeepulvers der Brühkolben (18) in eine Stellung mit Abstand zum Kaffeekuchen bewegt wird.

14. Verfahren nach Anspruch 12 oder 13, **dadurch gekennzeichnet, dass** ein zum Verpressen aufgewendeter Anpressdruck einstellbar ist.

## Claims

1. Espresso and coffee machine (10) with a brewing unit, comprising
a brewing chamber (16),
means for generating and delivering hot brewing water under pressure into the brewing chamber (16),
a brewing piston (18) for repeatedly closing and opening the brewing chamber (16), and for moving the brewing piston (18) in the brewing chamber (16) into a pressing position and/or a brewing position, whereby the brewing unit is designed in such a way that the brewing water is able to be introduced laterally into the brewing unit,
**characterized**
**in that** the brewing water is able to be introduced by means of a brewing water inlet provided on a lower end of the brewing piston (18).

2. Espresso and coffee machine (10) according to claim 1, **characterized in that** the brewing piston (18) is designed as a hollow cylinder, whereby the inlet of the brewing water is provided in the interior of the hollow cylinder on a lower region.

3. Espresso and coffee machine (10) according to claim 1 or 2, further comprising an actuating lever (50), which is movable at least partially by hand, whereby with movement of the actuating lever (50) in one direction the brewing piston (18) in the brewing chamber (16) is moved into a pressing position and/or a brewing position, and comprises adjusting means with a fluid system (34), which comprise at least a first cylinder/piston configuration (48), whereby the actuating lever (50) is in operative connection to a piston (52) of the first cylinder/piston configuration (48) and to adjusting means in such a way that with movement of the actuating lever (50) in one direction pressure is built up in the fluid system (34), whereby the brewing piston (18) disposed in a second cylinder/piston configuration (22) in the brewing chamber (16) is moved into the pressing position and/or the brewing position.

4. Espresso and coffee machine (10) according to claim 3, **characterized in that** the fluid system (34) comprises a compensating reservoir (40) and a pressure sensor (46).

5. Espresso and coffee machine (10) according to claim 4, **characterized in that** the adjusting means further comprise a pump (60), which in operative connection to the actuating lever (50) is connected in a switchable and fluid-conducting way to the compensating reservoir (40) whereby the pump (60) is set up to build up pressure in the fluid system (34).

6. Espresso and coffee machine (10) according to one of the claims 3 to 5, **characterized in that** the brewing piston (18) disposed in the second cylinder/piston configuration (22) is with a radially acting seal, displaceably received in the brewing chamber (16) and is with a piston rod connected to an upper piston (26) with a radially acting seal, which piston is displaceably received in a fluid chamber (30).

7. Espresso and coffee machine (10) according to one of the claims 3 to 6, **characterized in that** disposed in the fluid system (34) is a pressure sensor (46), in order to register the pressure in the fluid system (34), which is adjustable to a defined value.

8. Espresso and coffee machine (10) according to claim 7, **characterized in that** the pressure is adjustable to a defined value by means of a switchable valve (44), which is disposed in the fluid system (34).

9. Espresso and coffee machine (10) according to claim 8, **characterized in that** with opened valve (44) fluid is conducted from the second cylinder/piston configuration (22) into the compensating reservoir (40), whereby the upper piston (26) is displaced upwards by means of a spring force of a disposed spring element (32).

10. Espresso and coffee machine (10) according to one of the claims 3 to 9, **characterized in that** the fluid is food grade hydraulic oil.

11. Espresso and coffee machine (10) according to one of the claims 1 to 10 **characterized in that** a bypass brewing system is set up in order to divide the hot water introduced into the brewing piston into an extraction stream and a bypass stream, which is passed by the ground coffee located in the brewing chamber (16), and whereby both streams are merged downstream..

12. Method for operation of the espresso and coffee machine (10) according to one of the claims 3 to 11 comprising the following steps:
- inserting a portafilter (12) into a holder provided therefor on a brewing chamber (16), into which ground coffee produced using a grinder is fillable;
- manually moving an actuating lever (50), disposed on the espresso and coffee machine, from a starting position into an end position;
- generating pressure in a fluid system (34) through an operative connection of the actuating lever (50) to adjusting means of the espresso and coffee machine (10), at least comprising a first cylinder/piston configuration;
- closing the brewing chamber (16) by means of the brewing piston (18) disposed in a second cylinder/piston configuration (18), which piston is acted upon by the pressure generated by means of the adjusting means;
- pressing, with a defined compacting pressure, of the ground coffee in the portafilter (12) into a coffee cake by the pressurized brewing piston (18);
- distributing hot water on the pressed ground coffee in the portafilter (12);
- autonomous moving of the actuating lever (50) back into the starting position; and
- removing coffee grounds from the portafilter (12).

13. Method according to claim 12, **characterized in that** after the pressing of the ground coffee the brewing piston (18) is moved into a position spaced apart from the coffee cake.

14. Method according to claim 12 or 13, **characterized in that** a compacting pressure used for the pressing is adjustable.

## Revendications

1. Machine à expresso et à café (10) pourvue d'une unité de brassage, comprenant
une chambre de brassage (16),
des moyens pour générer et dispenser de l'eau chaude sous pression dans la chambre de brassage (16),
un piston de brassage (18) pour fermer et ouvrir de manière répétée la chambre de brassage (16), et pour déplacer le piston de brassage (18) dans la chambre de brassage (16) dans une position de pressage et/ou une position de brassage, l'unité de brassage étant conçue de manière à ce que l'eau de brassage puisse être introduite latéralement dans l'unité de brassage,
**caractérisée**
**en ce que** l'eau de brassage peut être introduite au moyen d'une entrée d'eau de brassage aménagée sur une extrémité inférieure du piston de brassage (18).

2. Machine à expresso et à café (10) selon la revendication 1, **caractérisée en ce que** le piston de brassage (18) est agencé sous forme d'un cylindre creux, l'entrée de l'eau de brassage étant aménagée au niveau d'une zone inférieure à l'intérieur du cylindre creux.

3. Machine à expresso et à café (10) selon la revendication 1 ou 2, comprenant en outre un levier d'actionnement (50), qui est déplaçable au moins partiellement manuellement, et via un mouvement duquel, dans une direction, le piston de brassage (18), dans la chambre de brassage (16), est déplacé dans une position de pressurage et/ou une position de brassage; et comportant des moyens de réglage fonctionnant à l'aide d'un système de fluide (34), qui comprennent au moins un premier agencement de cylindre/piston (48), le levier d'actionnement (50) étant en lien fonctionnel avec un piston (52) du premier agencement de cylindre/piston (48) et avec des moyens de réglage de telle manière à ce que, lors d'un mouvement du levier d'actionnement (50) dans une direction, une pression est générée dans le système de fluide (34), le piston de brassage (18) disposé dans un deuxième agencement de cylindre/piston (22) dans la chambre de brassage (16) étant alors déplacé dans la position de pressage et/ou la position de brassage.

4. Machine à expresso et à café (10) selon la revendication 3, **caractérisée en ce que** le système de fluide (34) comprend un réservoir de compensation (40) et un capteur de pression (46).

5. Machine à expresso et à café (10) selon la revendication 4, **caractérisée en ce que** les moyens de réglage comprennent en outre une pompe (60), qui est reliée fonctionnellement au levier de réglage (50) de façon commutable et de manière à conduire du fluide vers le réservoir de compensation (40), la pompe étant configurée pour générer de la pression dans le système de fluide (34).

6. Machine à expresso et à café (10) selon l'une des revendications 3 à 5, **caractérisée en ce que** le piston de brassage (18) disposé dans le deuxième agencement de cylindre/piston (22) logé de façon coulissante dans la chambre de brassage (16) avec un joint agissant de manière radiale, et est relié, via une tige de piston, à un piston supérieur (26) avec un joint agissant de manière radiale, lequel piston est logé de façon coulissante dans une chambre de fluide (30).

7. Machine à expresso et à café (10) selon l'une des revendications 3 à 6, **caractérisée en ce qu'**un capteur de pression (46) est disposé dans le système de fluide (34), afin de capter la pression dans le système de fluide (34), laquelle pouvant être ajustée à une valeur prédéfinie.

8. Machine à expresso et à café (10), selon la revendication 7, **caractérisée en ce que** la pression est réglable à une valeur prédéfinie au moyen d'une valve commutable (44), qui est agencée dans le système de fluide (34).

9. Machine à expresso et à café (10) selon la revendication 8, **caractérisée en ce que**, lorsque la valve est ouverte (44), le fluide est véhiculé du deuxième agencement de cylindre/piston (22) vers le réservoir de compensation (40), le piston supérieur (26) étant alors déplacé vers le haut au moyen d'une force élastique de rappel d'un ressort (32) agencé sur le piston.

10. Machine à expresso et à café (10) selon l'une des revendications 3 à 9, **caractérisée en ce que** le fluide est une huile hydraulique appropriée pour un usage alimentaire.

11. Machine à expresso et à café (10) selon l'une des revendications 1 à 10, **caractérisée en ce qu'**un système de brassage de contournement est mis en place afin de répartir l'eau chaude acheminée vers le piston de brassage entre un flux d'extraction et un flux de contournement, lequel est dirigé sur la poudre de café située dans la chambre de brassage (16), les deux flux étant ensuite réunis en aval.

12. Méthode pour faire fonctionner la machine à expresso et à café (10) selon l'une des revendications 3 à 11 comprenant les étapes suivantes :
- le placement d'un porte-filtre (12) sur un support prévu à cet effet dans une chambre de brassage (16), dans lequel de la poudre de café produite avec un moulin à café peut être placée ;
- le déplacement manuel d'un levier d'actionnement (50), disposé sur la machine à expresso et à café, depuis une position initiale vers une position finale ;
- la génération de pression dans un système de fluide (34) par une liaison fonctionnelle du levier d'actionnement (50) avec des moyens de réglage de la machine à expresso et à café (10), comprenant au moins un premier agencement de cylindre/piston ;
- la fermeture de la chambre de brassage (16) par le piston de brassage (18) disposé dans un deuxième agencement de cylindre/piston (18), lequel piston étant mis sous pression par application de la pression produite par les moyens de réglage ;
- le compactage de la poudre à café dans le porte-filtre (12) par le piston de brassage (18) à l'aide d'une pression de contact prédéfinie pour réaliser un gâteau de marc de café moulu ;
- la diffusion d'eau chaude sur la poudre de café compactée dans le porte-filtre (12) ;
- le déplacement autonome du levier d'actionnement (50) pour retourner dans sa position initiale ; et
- l'élimination des restes du café utilisé du porte-filtre (12).

13. Méthode selon la revendication 12, **caractérisée en ce que** le piston de brassage (18) est déplacé dans une position espacée du gâteau de marc de café moulu après le compactage de la poudre à café.

14. Méthode selon les revendications 12 ou 13, **caractérisée en ce que** la pression de surface à appliquer est ajustable.
